# EUROPÄISCHE PATENTSCHRIFT

(11) **EP 2 927 186 B1**
(45) Veröffentlichungstag und Bekanntmachung des Hinweises auf die Patenterteilung: **28.09.2016**
(21) Anmeldenummer: 15160435.2
(22) Anmeldetag: 24.03.2015
(51) Int. Cl.: B66F 9/075, B66F 9/24, G06K 19/06

(54) **VERFAHREN UND SYSTEM ZUM BETRIEB EINES FLURFÖRDERZEUGS**
METHOD AND SYSTEM FOR OPERATING AN INDUSTRIAL TRUCK
PROCÉDÉ ET SYSTÈME DE FONCTIONNEMENT D'UN CHARIOT DE MANUTENTION

(30) Priorität: 02.04.2014 DE 102014104684
(43) Veröffentlichungstag der Anmeldung: 07.10.2015
(73) Patentinhaber: Linde Material Handling GmbH, 63743 Aschaffenburg (DE)
(72) Erfinder: Koller, Georg, 63811 Stockstadt am Main (DE)
(74) Vertreter: Geirhos, Johann

(56) Entgegenhaltungen:
- EP-A1- 1 655 263
- EP-A1- 2 080 731
- CN-A- 103 532 880
- DE-A1-102011 016 019
- DE-A1-102013 011 126
- US-A1- 2013 256 422

## Beschreibung

Die Erfindung betrifft ein Verfahren zum Betrieb eines Flurförderzeugs. Insbesondere betrifft die Erfindung ein Verfahren zur Steuerung eines Flurförderzeugs mit zumindest einer grafischen Anzeigevorrichtung, einer Steuervorrichtung sowie einem Speicherelement, auf dem Informationen zur Bedienung und/oder Wartung des Flurförderzeugs abgespeichert sind. Weiterhin betrifft die Erfindung auch ein entsprechendes Flurförderzeug sowie ein System mit einem solchen Flurförderzeug.

Flurförderzeuge weisen eine Vielzahl von Funktionen und Einstellungsmöglichkeiten auf, die von einer Bedienperson während des Betriebs oder im Rahmen von Wartungsarbeiten vorgenommen werden können. Damit eine Bedienperson sich über diese Funktionen und Einstellmöglichkeiten orientieren kann, ist es notwendig, relativ umfangreiche Bedienungsanleitungen zu erstellen und mit dem Flurförderzeug auszuliefern. Im Rahmen der Wartung bzw. Reparatur ist es dabei bekannt, dass eine Fahrzeugsteuerung des Flurförderzeugs Fehlernummern ausgibt, beispielsweise über ein Display oder auch nur eine 7-Segmentanzeige. Mithilfe dieser Fehlernummern kann eine Bedienperson, ein Inhaber des Flurförderzeugs, aber vor allem auch ein Wartungsmonteur in entsprechenden Verzeichnissen, insbesondere der Betriebsanleitung, eine zugehörige Erläuterung bzw. Anleitung für die Fehlerbehebung nachschauen.

Durch die mögliche große Anzahl an Varianten von Flurförderzeugen mit verschiedenen Gewichtsklassen, Hubhöhen, unterschiedlichen Antriebsarten von einem Verbrennungsmotor über einen batterieelektrischen Antrieb bis hin zu Hybridsystemen, sowie optionalen Zusatzausrüstungen werden jedoch eine erhebliche Anzahl von Varianten von Betriebsanleitungen erforderlich oder alternativ wenige, sehr umfangreiche Betriebsanleitungen, die viele Varianten abdecken. Hierbei stoßen klassische, gedruckte Medien als Betriebsanleitung an ihre Grenzen. Darüber hinaus macht die Komplexität moderner Flurförderzeuge einer Bedienperson wie auch einem Wartungsmonteur zunehmend Probleme. Um diese Komplexität leichter bewältigen zu können, wären zusätzliche Informationen zu den bereits umfangreichen

Betriebsanleitungen wünschenswert.

Um dieses Problem zu lösen, ist es bekannt, eine Betriebsanleitung wie auch genauere Erläuterungen zu möglichen Fehlern in einem Datenspeicher des Flurförderzeugs selbst digital zu hinterlegen. Die Betriebsanleitung oder Reparaturanweisungen können dann erforderlichenfalls über eine Anzeigevorrichtung, wie sie häufig zum Einsatz kommt in Form eines Displays oder Flachbildschirms, durch die Fahrzeugsteuerung angezeigt werden.

Nachteilig an diesem Stand der Technik ist, dass die Informationen nur genau an diesem einen Display zur Verfügung stehen und beispielsweise nicht mitgeführt werden können, wenn an anderen Stellen des Fahrzeugs Bedienvorgänge oder insbesondere Wartungsvorgänge zu erfolgen haben. Weiterhin ist die Bedienbarkeit der Betriebsanleitung im Sinne eines interaktiven Lesens nur eingeschränkt möglich, da auch die Eingabemöglichkeiten begrenzt sind auf diejenigen des Flurförderzeugs. So steht im Regelfall kein Touchscreen zur Verfügung und können nur vorhandene Tasten für eine Menüauswahl bzw. Eingabe genutzt werden.

Aus der EP 1 655 263 A1 Es ist ein Flurförderzeug bekannt, bei dem über Anzeigeelemente Bedienungs- und/oder Wartungsinformationen, insbesondere eine Bedienungsanleitung optisch angezeigt werden.

Dieser Stand der Technik weist die bereits beschriebenen Nachteile auf.

Der vorliegenden Erfindung liegt daher die Aufgabe zugrunde, ein Verfahren zur Steuerung eines Flurförderzeugs zur Verfügung zu stellen, das die oben genannten Nachteile vermeidet und mit dem es möglich ist, an das Flurförderzeug angepasste Informationen über die Bedienung und/oder Wartung in vorteilhaft handhabbarer Weise zur Verfügung zu stellen. Weiterhin ist es Aufgabe der Erfindung, ein entsprechendes Flurförderzeug sowie ein System mit einem solchen Flurförderzeug zur Verfügung zu stellen.

Diese Aufgabe wird durch ein Verfahren zur Steuerung eines Flurförderzeugs mit den Merkmalen des Patentanspruchs 1, durch ein Flurförderzeug mit den Merkmalen des Patentanspruchs 15 sowie ein System mit den Merkmalen des Patentanspruchs 16 gelöst. Vorteilhafte Weiterbildungen der Erfindung sind in den Unteransprüchen angegeben.

Die Aufgabe wird erfindungsgemäß dadurch gelöst, dass bei einem Verfahren zur Steuerung eines Flurförderzeugs mit zumindest einer grafischen Anzeigevorrichtung, einer Steuervorrichtung sowie einem Speicherelement, auf dem Informationen zur Bedienung und/oder Wartung des Flurförderzeugs abgespeichert sind, die Steuervorrichtung abhängig von einem Betriebszustand und/oder einem aufgetretenen Fehler und/oder einer durch eine Bedienperson in eine Eingabevorrichtung eingebbaren Anforderung auf der Anzeigevorrichtung einen Barcode mit zugeordneten Informationen anzeigt.

Vorteilhaft ist dann eine schriftliche Bedienungsanleitung nicht mehr unbedingt erforderlich. Insbesondere können sehr viel umfangreichere Informationen digital gespeichert werden als dies mit Papier möglich wäre. Die Informationen werden auf der Anzeigevorrichtung des Flurförderzeugs zum Auslesen durch ein anderes Gerät bereitgestellt, beispielsweise einen tragbaren Computer wie etwa ein Smartphone, ein Notebook oder ein Tablet-PC. Solche tragbaren Computer bzw. Computervorrichtungen ganz allgemein müssen dann nur eine Kamera und entsprechende Software aufweisen, um die Informationen auslesen, verarbeiten und wiederum anzeigen zu können. Dies bietet jedoch für den Bediener den Vorteil, dass die Funktionen, die durch diese Computervorrichtungen zur Verfügung gestellt werden, beispielsweise bei einem Tablet-PC oder Smartphone ein Touchscreen mit entsprechend komfortablen und intuitiven Möglichkeiten der Menüführung, in vollem Umfang für die Darstellung und Vermittlung der Informationen zur Verfügung stehen. Insbesondere bei tragbaren Computervorrichtungen bzw. Computern ergibt sich überdies der Vorteil, dass diese unmittelbar an dem Ort benutzt werden können, an dem beispielsweise Wartungsarbeiten oder bestimmte Maßnahmen entsprechend den Informationen vorgenommen werden müssen. Dabei können die zur Verfügung gestellten Informationen zur Bedienung und/oder Wartung des Flurförderzeugs als Inhalt sowohl reinen Text aufweisen, Verlinkungen, wie beispielsweise Internetadressen, Geo-Daten, Kontaktdaten für weitere Informationen, wie beispielsweise SMS, E-Mail Daten oder Telefonnummern, aber auch Zugangsdaten für drahtlose Netze wie ein WLAN bzw. WiFi.

Vorteilhaft ist der Barcode ein zweidimensionaler Barcode.

Bei einem zweidimensionalen Barcode erfolgt eine Kodierung sowohl in X- als auch Y-Richtung und es ergibt sich ein Rechteck mit einzelnen Feldern, die für die Kodierung hell oder dunkel sind. Dabei ist es nicht zwingend erforderlich, dass dieses Feld insgesamt quadratisch ist, sondern es ist auch eine beliebige Rechteckform möglich.

Der Barcode kann ein dreidimensionaler Barcode sein.

Bei einem dreidimensionalen Barcode erfolgt eine zusätzliche Codierung durch beispielsweise einen Helligkeitswert und/oder einen Farbwert. Vorteilhaft lassen sich dadurch auch höhere Datenmengen kodieren und transportieren. Es ergibt sich eine höhere Informationsdichte.

In einer günstigen Ausgestaltung werden die Informationen in einer zeitlichen Abfolge unterschiedlicher Barcodes angezeigt.

Dadurch ergibt sich quasi eine Animationssequenz und durch die zusätzliche Zeitinformation des wie ein Film ablaufenden Barcodes können erheblich größere Datenmengen übertragen werden. Dies ermöglicht es insbesondere auch, als Informationen Filme mit Anweisungen und näheren Erläuterungen zu übertragen. Durch einen n-fachen Bildwechsel des Barcodes ergibt sich die n-fache Information.

Die Informationen können Arbeitsanweisungen und/oder Betriebsanleitungen und/oder Reparaturanleitungen und/oder Inbetriebnahmeanweisungen umfassen.

In einer günstigen Weiterbildung des Verfahrens umfassen die Informationen Betriebsdaten, insbesondere Konfigurationsdaten und/oder Vorgabewerte.

Dadurch können weiterführende Informationen für einen Wartungsmonteur bzw. eine Bedienperson zur Verfügung gestellt werden und angezeigt werden. Beispielsweise können dies Konfigurationen zu bestimmten Anbauteilen oder speziellen Sonderausführungen des Flurförderzeugs sein. Ebenso möglich sind einprogrammierte oder durch Lernverfahren eingespeicherte Teachwerte, beispielsweise eines Neigewinkelsensors eines Achslastsensors.

Die Informationen können Reparaturanleitungen umfassen, insbesondere zu verwendende Werkzeuge und/oder Montageeinstellwerte und/oder Prüfvorschriften.

Dadurch werden Service- und Wartungsarbeiten vereinfacht. Insbesondere ist es auch möglich, eine spezifische, für eine bestimmte Variante und Ausstattung vorgesehene, geführte Reparaturanweisung anzuzeigen. So können beispielsweise Abhängigkeiten einer Funktion von weiteren Elementen darzustellen. Beispielsweise LSP funktioniert nur in Abhängigkeit von ordnungsgemäßer Funktion von zum Beispiel Achslastsensor, Hydraulik, Hubhöhensensor, Neigewinkelsensor.

Die Informationen können erforderliche Ersatzteile umfassen, insbesondere Bestellnummern.

Diese können beispielsweise auch fehlerspezifisch aufgelistet werden. Weiterhin ist es denkbar, dass durch entsprechende Software in den auslesenden Computervorrichtungen Ersatzteilnummern automatisiert oder nach Eingabe eines entsprechenden Befehls weiter übertragen werden und eine Bestellung automatisiert durchgeführt wird, beispielsweise über das Internet, eine Mobilfunkverbindung etc.. Eine solche automatisierte Datenkommunikation mit einem zentralen Server, insbesondere des Herstellers der Flurförderzeuge, ist aus dem Stand der Technik bekannt und auch hier in Kombination anwendbar.

Vorteilhaft umfassen die Informationen Kontaktdaten.

Dies können Telefonnummern sein oder E-Mail-Adressen, die eine Verbindung mit einer Vertriebsorganisation zu Wartungszwecken ermöglichen. Dadurch muss eine Bedienperson bzw. ein Wartungsmonteur die entsprechenden Kontaktdaten nicht per Hand abtippen, sondern bekommt diese automatisch übertragen. Weiterhin ist auch eine automatisierte Kontaktaufnahme denkbar, bei der direkt Ortsdaten, Betriebsinformationen und Informationen über das Flurförderzeug betreffend Gewährleistung, wie Kaufdatum und Optionen übertragen werden können.

Die Kontaktdaten können eine Internetadresse umfassen.

Dies bietet den Vorteil, dass auf dieser Internetseite aktualisierte und stets gepflegte Informationen sowie weitere Details zur Verfügung gestellt werden können. Beispielsweise kann nach dem Auslieferungszeitpunkt des Flurförderzeugs hier noch eine Aktualisierung stattfinden. Vorteilhaft wird es dadurch möglich, die Datenmenge in dem Flurförderzeug wie auch die Komplexität der zur Verfügung zu stellen Informationen zu reduzieren, da spezielle weitere Informationen wie etwa aufwändigere Grafiken oder spezielle Sprachversionen indirekt über das Internet zur Verfügung gestellt werden können. Dies ermöglicht auch eine Übertragung von Daten zu dem Hersteller eines Flurförderzeugs bzw. zu einem zentralen Server, um Statistiken zur Häufigkeit und Zeitpunkt des Betriebs sowie weiteren Einsatzdaten zu ermöglichen.

Die Informationen können einen Zugangscode umfassen.

Etwa können Schlüssel für ein WLAN Netz oder sonstige aufzubauen der Verbindungen übertragen werden.

Die Informationen können zumindest zum Teil verschlüsselt sein.

Dies ermöglicht es, die Informationen oder Teile dieser Informationen nur einem ausgewählten Personenkreis zugänglich zu machen, etwa einem Wartungsmonteur, und nicht allgemein jeder Bedienperson.

In einer vorteilhaften Ausgestaltung des Verfahrens können die Informationen ein Film sein.

Die Informationen können Fehlernummern enthalten, die über eine Software, insbesondere eine App, an den Betreiber und/oder Händler und/oder Hersteller gesandt werden können.

Über die Software eines Computers, aber insbesondere auch über eine App eines Smartphones bzw. Tablet-Computers, können entsprechende Fehlernummern an einen Betreiber, Händler oder auch Hersteller gesandt werden. Dies bietet die Möglichkeit, die so genannte First Time Fix Rate zu optimieren, entsprechend der Quote der erfolgreichen Reparaturen bei erstem Anlauf bzw. Reparaturtermin des Händlers oder der Werkstatt.

Die Aufgabe wird auch gelöst durch ein Flurförderzeug mit zumindest einer grafischen Anzeigevorrichtung, einer Steuervorrichtung sowie einem Speicherelement, auf dem Informationen zur Bedienung und/oder Wartung des Flurförderzeugs abgespeichert sind, wobei die Steuervorrichtung ein zuvor beschriebenes Verfahren durchführt.

Für das Flurförderzeug ergeben sich die bereits dargelegt Vorteile.

Weiterhin wird die Aufgabe auch gelöst durch ein System aus einem Flurförderzeug, wie es zuvor beschrieben wurde, sowie einer Computervorrichtung mit einer Kameraeinrichtung, einer Anzeigevorrichtung sowie einer Software zur Auswertung eines Barcodes und Darstellung der Informationen auf der Anzeigevorrichtung.

Vorteilhaft kann die Computervorrichtung ein Smartphone sein.

Durch ein Smartphone ergibt sich eine kompakte Möglichkeit, die Informationen tragbar an jeweiligen Einsatzort zur Verfügung zu stellen. Insbesondere ist es durch eine entsprechende App möglich, hierfür die Smartphones der entsprechenden Personen einzusetzen, ohne ein spezielles gesondertes Gerät zu benötigen.

In einer günstigen Ausgestaltung ist die Computervorrichtung ein Notebook und/oder Tablet PC.

Hier ergeben sich dieselben Vorteile wie bei einem Smartphone.

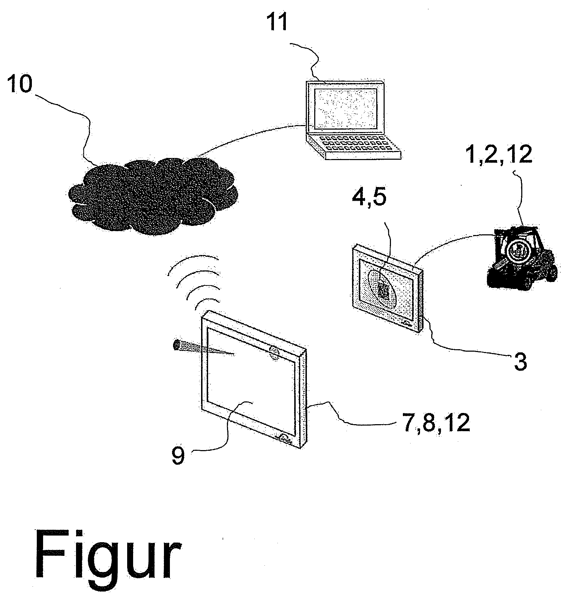

Weitere Vorteile und Einzelheiten der Erfindung werden anhand des in der schematischen Figur dargestellten Ausführungsbeispiels näher erläutert. Hierbei zeigt die Figur schematisch das erfindungsgemäße Verfahren. Ein Gabelstapler 1 als Beispiel eines Flurförderzeugs 2 weist eine Anzeigevorrichtung 3 auf, die hervorgehoben dargestellt ist. Beim Auftreten eines Fehlers wird von einer Steuervorrichtung auf der Anzeigevorrichtung 3 ein Barcode 4 dargestellt, in dem Beispielsfall ein zweidimensionaler Barcode 5, oder alternativ ein dreidimensionaler Barcode. Eine Computervorrichtung 7, die als Tablet-PC 8 ausgeführt ist, nimmt mit einer entsprechenden Software und einer integrierten, nicht dargestellten Kamera, den Barcode 4 auf und verarbeitet diesen. Aus den übertragenen Informationen bekommt eine Bedienperson auf einer Anzeige 9 der Computervorrichtung 7 Anweisungen. Zugleich werden über das Internet 10 Informationen an einen Server 11, beispielsweise des Herstellers des Flurförderzeugs, übertragen. Diese Informationen können beispielsweise benötigte Ersatzteilnummern sein. Das Flurförderzeug 2 und die Computervorrichtung 7 bilden ein System 12.

## Patentansprüche

1. Verfahren zur Steuerung eines Flurförderzeugs (1) mit zumindest einer grafischen Anzeigevorrichtung (3), einer Steuervorrichtung sowie einem Speicherelement, auf dem Informationen zur Bedienung und/oder Wartung des Flurförderzeugs (1) abgespeichert sind,
**dadurch gekennzeichnet,**
**dass** die Steuervorrichtung abhängig von einem Betriebszustand und/oder einem aufgetretenen Fehler und/oder einer durch eine Bedienperson in eine Eingabevorrichtung eingebbaren Anforderung auf der Anzeigevorrichtung (3) einen Barcode (4) mit zugeordneten Informationen anzeigt.

2. Verfahren nach Anspruch 1,
**dadurch gekennzeichnet,**
**dass** der Barcode (4) ein zweidimensionaler Barcode (5) ist.

3. Verfahren nach Anspruch 2,
**dadurch gekennzeichnet,**
**dass** der Barcode (4) ein dreidimensionaler Barcode ist.

4. Verfahren nach einem der Ansprüche 1 bis 3,
**dadurch gekennzeichnet,**
**dass** die Informationen in einer zeitlichen Abfolge unterschiedlicher Barcodes (3) angezeigt werden.

5. Verfahren nach einem der Ansprüche 1 bis 4,
**dadurch gekennzeichnet,**
**dass** die Informationen Arbeitsanweisungen und/oder Betriebsanleitungen und/oder Reparaturanleitungen und/oder Inbetriebnahmeanweisungen umfassen.

6. Verfahren nach einem der Ansprüche 1 bis 5,
**dadurch gekennzeichnet,**
**dass** die Informationen Betriebsdaten umfassen, insbesondere Konfigurationsdaten und/oder Vorgabewerte.

7. Verfahren nach einem der Ansprüche 1 bis 6,
**dadurch gekennzeichnet,**
**dass** die Informationen Reparaturanleitungen umfassen, insbesondere zu verwendende Werkzeuge und/oder Montageeinstellwerte und/oder Prüfvorschriften.

8. Verfahren nach einem der Ansprüche 1 bis 7,
**dadurch gekennzeichnet,**
**dass** die Informationen erforderliche Ersatzteile umfassen, insbesondere Bestellnummern.

9. Verfahren nach einem der Ansprüche 1 bis 8,
**dadurch gekennzeichnet,**
**dass** die Informationen Kontaktdaten umfassen.

10. Verfahren nach Anspruch 9,
**dadurch gekennzeichnet,**
**dass** die Kontaktdaten eine Internetadresse umfassen.

11. Verfahren nach einem der Ansprüche 1 bis 10,
**dadurch gekennzeichnet,**
**dass** die Informationen einen Zugangscode umfassen.

12. Verfahren nach einem der Ansprüche 1 bis 11,
**dadurch gekennzeichnet,**
**dass** die Informationen zumindest zum Teil verschlüsselt sind.

13. Verfahren nach einem der Ansprüche 1 bis 12,
**dadurch gekennzeichnet,**
**dass** die Informationen ein Film sind.

14. Verfahren nach einem der Ansprüche 1 bis 13,
**dadurch gekennzeichnet,**
**dass** die Informationen Fehlernummern enthalten, die über eine Software, insbesondere eine App, an den Betreiber und/oder Händler und/oder Hersteller gesandt werden können.

15. Flurförderzeug mit zumindest einer grafischen Anzeigevorrichtung (3), einer Steuervorrichtung sowie einem Speicherelement, auf dem Informationen zur Bedienung und/oder Wartung des Flurförderzeugs (1) abgespeichert sind, wobei die Steuervorrichtung ein Verfahren nach einem der vorhergehenden Ansprüche durchführt.

16. System aus einem Flurförderzeug (1) nach Anspruch 15 sowie einer Computervorrichtung (7) mit einer Kameraeinrichtung, einer Anzeigevorrichtung (9) sowie einer Software zur Auswertung eines Barcodes (4) und Darstellung der Informationen auf der Anzeigevorrichtung (9).

17. System nach Anspruch 16,
**dadurch gekennzeichnet,**
**dass** die Computervorrichtung (7) ein Smartphone ist.

18. System nach Anspruch 17,
**dadurch gekennzeichnet,**
**dass** die Computervorrichtung (7) ein Notebook und/oder Tablet-PC (8) ist.

## Claims

1. Method for controlling an industrial truck (1) having at least one graphical display apparatus (3), a control apparatus and a storage element which stores information for operating and/or maintaining the industrial truck (1),
**characterized in that**
the control apparatus displays a barcode (4) with associated information on the display apparatus (3) on the basis of an operating state and/or a fault which has occurred and/or a request which can be input to an input apparatus by an operator.

2. Method according to Claim 1,
**characterized in that**
the barcode (4) is a two-dimensional barcode (5).

3. Method according to Claim 2,
**characterized in that**
the barcode (4) is a three-dimensional barcode.

4. Method according to one of Claims 1 to 3,
**characterized in that**
the information is displayed in a temporal sequence of different barcodes (3).

5. Method according to one of Claims 1 to 4,
**characterized in that**
the information comprises working instructions and/or operating instructions and/or repair instructions and/or start-up instructions.

6. Method according to one of Claims 1 to 5,
**characterized in that**
the information comprises operating data, in particular configuration data and/or default values.

7. Method according to one of Claims 1 to 6,
**characterized in that**
the information comprises repair instructions, in particular tools to be used and/or installation setting values and/or test regulations.

8. Method according to one of Claims 1 to 7,
**characterized in that**
the information comprises required spare parts, in particular order numbers.

9. Method according to one of Claims 1 to 8,
**characterized in that**
the information comprises contact data.

10. Method according to Claim 9,
**characterized in that**
the contact data comprise an Internet address.

11. Method according to one of Claims 1 to 10,
**characterized in that**
the information comprises an access code.

12. Method according to one of Claims 1 to 11,
**characterized in that**
the information is at least partially encrypted.

13. Method according to one of Claims 1 to 12,
**characterized in that**
the information is a film.

14. Method according to one of Claims 1 to 13,
**characterized in that**
the information contains fault numbers which can be transmitted to the operator and/or dealer and/or manufacturer via software, in particular an app.

15. Industrial truck having at least one graphical display apparatus (3), a control apparatus and a storage element which stores information for operating and/or maintaining the industrial truck (1), the control apparatus carrying out a method according to one of the preceding claims.

16. System comprising an industrial truck (1) according to Claim 15 and a computer apparatus (7) with a camera device, a display apparatus (9) and software for evaluating a barcode (4) and displaying the information on the display apparatus (9).

17. System according to Claim 16,
**characterized in that**
the computer apparatus (7) is a smartphone.

18. System according to Claim 17,
**characterized in that**
the computer apparatus (7) is a notebook and/or a tablet PC (8).

## Revendications

1. Procédé de commande d'un chariot de manutention (1) comportant au moins un dispositif d'affichage graphique (3), un dispositif de commande ainsi qu'un élément à mémoire, sur lequel sont stockées des informations concernant l'utilisation et/ou la maintenance du chariot de manutention (1),
**caractérisé en ce que** le dispositif de commande affiche un code-barres (4) avec des informations associées en fonction d'un état de fonctionnement et/ou d'un défaut s'étant produit et/ou d'une demande pouvant être fournies en entrée à un dispositif d'entrée sur le dispositif d'affichage (3) par un opérateur.

2. Procédé selon la revendication 1,
**caractérisé en ce que** le code-barres (4) est un code-barres (5) bidimensionnel.

3. Procédé selon la revendication 2,
**caractérisé en ce que** le code-barres (4) est un code-barres tridimensionnel.

4. Procédé selon l'une quelconque des revendications 1 à 3,
**caractérisé en ce que** les informations sont affichées dans une série temporelle de codes-barres (3) différents.

5. Procédé selon l'une quelconque des revendications 1 à 4,
**caractérisé en ce que** les informations comprennent des instructions de travail et/ou des instructions d'utilisation et/ou des instructions de réparation et/ou des instructions de mise en service.

6. Procédé selon l'une quelconque des revendications 1 à 5,
**caractérisé en ce que** les informations comprennent des données de fonctionnement, en particulier des données de configuration et/ou des valeurs prédéterminées.

7. Procédé selon l'une quelconque des revendications 1 à 6,
**caractérisé en ce que** les informations comprennent des instructions de réparation, en particulier des outils et/ou des valeurs de réglage au montage et/ou des prescriptions d'essai devant être utilisés.

8. Procédé selon l'une quelconque des revendications 1 à 7,
**caractérisé en ce que** les informations comprennent des pièces détachées nécessaires, en particulier des numéros de référence.

9. Procédé selon l'une quelconque des revendications 1 à 8,
**caractérisé en ce que** les informations comprennent des données de contacts.

10. Procédé selon la revendication 9,
**caractérisé en ce que** les données de contacts comprennent une adresse internet.

11. Procédé selon l'une quelconque des revendications 1 à 10,
**caractérisé en ce que** les informations comprennent un code d'accès.

12. Procédé selon l'une quelconque des revendications 1 à 11,
**caractérisé en ce que** les informations sont au moins en partie cryptées.

13. Procédé selon l'une quelconque des revendications 1 à 12,
**caractérisé en ce que** les informations sont un film.

14. Procédé selon l'une quelconque des revendications 1 à 13,
**caractérisé en ce que** les informations contiennent des numéros de défauts qui peuvent être envoyées par l'intermédiaire d'un logiciel, en particulier d'une app, à l'opérateur et/ou au commerçant et/ou au fabricant.

15. Chariot de manutention comportant au moins un dispositif d'affichage graphique (3), un dispositif de commande ainsi qu'un élément à mémoire, sur lequel sont stockées des informations concernant l'utilisation et/ou la maintenance du chariot de manutention (1), dans lequel le dispositif de commande met en oeuvre un procédé selon l'une quelconque des revendications précédentes.

16. Système constitué d'un chariot de manutention (1) selon la revendication 15 ainsi que d'un dispositif informatique (7) comportant un dispositif à caméra, un dispositif d'affichage (9) ainsi qu'un logiciel permettant l'évaluation d'un code-barres (4) et la représentation des informations sur le dispositif d'affichage (9).

17. Système selon la revendication 16,
**caractérisé en ce que** le dispositif informatique (7) est un téléphone intelligent.

18. Système selon la revendication 17,
**caractérisé en ce que** le dispositif informatique (7) est un ordinateur portable et/ou une tablette-PC (8).
